# EUROPEAN PATENT APPLICATION

(11) **EP 1 566 364 A2**
(43) Date of publication of application: **24.08.2005**
(21) Application number: 05100871.2
(22) Date of filing: 09.02.2005
(51) Int. Cl.: C03B 29/16

(54) **Air-exhausting leer for laminated glass sheets**

(30) Priority: 20.02.2004 FI 20045046
(71) Applicant: Tamglass Ltd. Oy, 33730 Tampere (FI)
(72) Inventor: Ala-Savikota, Jari, 33100 Tampere (FI)
(74) Representative: LEITZINGER OY

(57) **Abstract**

The invention relates to an air-exhausting leer for laminated glass sheets, comprising a tunnel-like leer (1), a conveyor (2), including elements (2a) for carrying laminated glass sheets in a substantially upright position through the leer (1), and air circulation ducts (3), having fans (4) and heating elements (5) associated therewith for blasting heated air between the laminated glass sheets presently on the conveyor (2) within the leer (1). The leer (1) has its sides provided with movable walls (8) for adjusting the leer width to match a given glass size. This results in an enhanced passage of air between glass sheets regardless of variations in glass size.

## Description

The invention relates to an air-exhausting leer for laminated glass sheets, comprising
- a tunnel-like leer, having a longitudinal direction and a lateral direction;
- a conveyor for carrying laminated glass sheets continuously through the leer;
- retainer elements present in the conveyor for holding the glass sheets in a substantially upright position and in a lateral direction of the leer, i.e. crosswise relative to the conveying direction;
- air circulation ducts, having fans and heating elements associated therewith for blasting heated air between the laminated glass sheets presently on the conveyor within the leer;
- slots associated with the air circulation ducts in the leer's floor and ceiling for the circulation of air; and
- curtains or valves at the outer ends of the leer tunnel for covering tunnel mouths.

This type of air-exhausting leer is prior known from the Applicant's patent publication US 5,419,799. An object of the invention is to upgrade this prior known air-exhausting leer for an enhanced passage of air between glass sheets regardless of variations in glass size.

This object is accomplished on the basis of characterizing features as set forth in the appended claim 1. Preferred embodiments of the invention are set forth in the dependent claims.

The specification DE-198 09 582 C1 discloses a batch-type heat treatment space for performing a "Heat Soak" treatment on glass panels. Because of varying batch sizes, the space is provided with movable walls for an enhanced circulation of hot air through between individual glass sheets. The invention differs essentially from the above document in terms of the orientation, continuous operation, and heat treatment application of glasses.

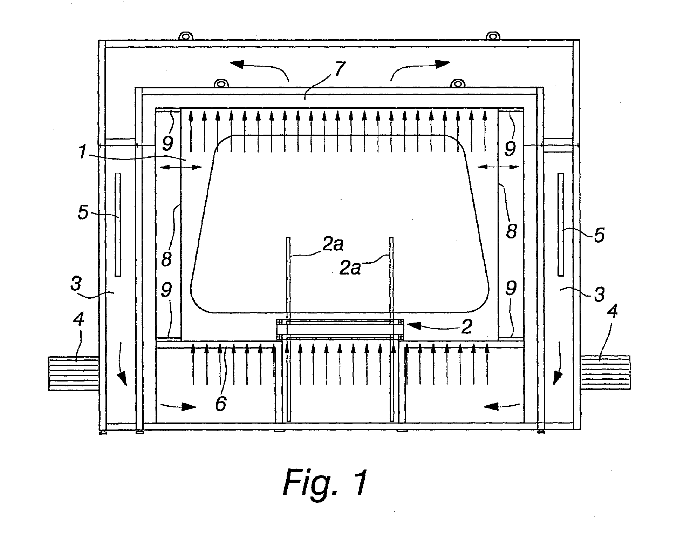

One exemplary embodiment of the invention will now be described in more detail with reference to the accompanying drawings, in which
- Fig. 1: shows an air-exhausting leer of the invention in cross-section with a large glass size, and

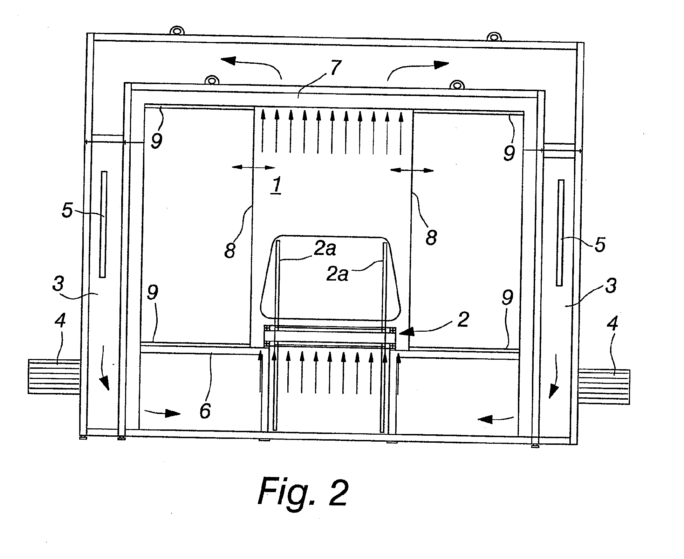

- Fig. 2: shows the same leer in cross-section with a small glass size.

Regarding the functions and structural details of the air-exhausting leer, which do not fall within the scope of this invention, reference is made to the Applicant's patent publication US-5,419,799.

The illustrated air-exhausting leer comprises a tunnel-like leer 1, including a conveyor 2 whose retainer arms 2a support pairs of glass sheets in an upright position. The glass sheets are disposed in a lateral direction of the leer, i.e. crosswise to the conveying direction. The pairs of glass sheets presently in the conveyor 2 proceed slowly through the leer 1. Thus, the leer is continuous in operation. The leer 1 is encircled by air circulation ducts 3, having fans 4 and heating elements 5 associated therewith for blasting heated air through between the pairs of glass sheets presently on the conveyor within the leer.

A novel feature in the invention is that the leer is provided on both sides with movable sealing walls 8, whereby the leer width can be adjusted to match a given glass size. This adjustment applies explicitly to the effective width of the leer 1, over which the blasting of air takes place. The walls 8 can be displaced manually or automatically.

In the present case, the air is blown in between pairs of glass sheets through a floor 6 of the leer vertically upwards. The leer has its floor 6 provided with appropriate blasting slots, the suction taking place respectively by way of suction slots provided in a ceiling 7 of the leer. The air may also have a reverse circulation direction, such that the blasting takes place from the leer's ceiling and the suction from its floor. It is also possible to provide a feature for reversing the circulation direction of air.

In the present case, the walls 8 consist of substantially upright panels, having their top and bottom ends provided with substantially horizontal cover screens or cover lamellae 9. These screens or lamellae 9 always cover those of the slots in the floor 6 and in the ceiling 7 which are not presently between the walls 8. The cover screens 9 can be e.g. rewindable or in the form of overlappable lamellae. Accordion-type folding and unfolding cover screens may also be useful. It may also be possible to use cover screens 9 guided the same way as rolling doors along a curving guideway to the housing wall of a leer.

Adjustability of the leer's 1 effective width provides a number of benefits:
- a more consistent heating of glasses due to a controlled passage of air between the glasses
- a suppression of sound level as only a small proportion of the tunnel mouth is covered by curtains used at the outer ends of the leer tunnel 1. The remaining tunnel mouth is more effectively covered by glasses present on the conveyor 2. It is feasible to use an up and down adjustable curtain or valve at the ends of the leer tunnel
- a conservation of energy with less air escaping from the tunnel ends through curtains.

## Claims

1. An air-exhausting leer for laminated glass sheets, comprising
- a tunnel-like leer (1), having a longitudinal direction and a lateral direction;
- a conveyor (2) for carrying laminated glass sheets continuously through the leer (1);
- retainer elements (2a) present in the conveyor (2) for holding the glass sheets in a substantially upright position and in the lateral direction of the leer, i.e. crosswise relative to the conveying direction;
- air circulation ducts (3), having fans (4) and heating elements (5) associated therewith for blasting heated air between the laminated glass sheets presently on the conveyor (2) within the leer (1);
- slots associated with the air circulation ducts (3) in the leer's floor and ceiling for the circulation of air; and
- curtains or valves at the outer ends of the leer tunnel for covering tunnel mouths,
**characterized in that** the leer (1) has its sides provided with movable walls (8) for adjusting the leer width to match a given glass size.

2. An air-exhausting leer as set forth in claim 1, **characterized in that** the walls (8) consist of substantially upright panels, having their top and bottom ends provided with substantially horizontal cover screens or lamellae (9).

3. An air-exhausting leer as set forth in claim 2, **characterized in that** the cover screens (9) are rewindable or the lamellae (9) are overlappable.

4. An air-exhausting leer as set forth in any of claims 1-3, **characterized in that** the circulation direction of hot air is such that the blasting takes place from a floor (6) of the leer through the conveyor (2) and the suction from a ceiling (7) of the leer across the area defined between the movable walls (8).

5. An air-exhausting leer as set forth in any of claims 1-3, **characterized in that** the circulation direction of hot air is such that the blasting takes place from a ceiling (7) of the leer and the suction from a floor (6) of the leer across the area defined between the movable walls (8).
